# EUROPEAN PATENT SPECIFICATION

(11) **EP 3 298 782 B1**
(45) Date of publication and mention of the grant of the patent: **21.12.2022**
(21) Application number: 17723729.4
(22) Date of filing: 13.04.2017
(51) Int. Cl.: H04N 19/30, H04N 19/51, H04N 19/593, G06T 9/00

(54) **MOTION COMPENSATION USING MACHINE LEARNING**
BEWEGUNGSKOMPENSATION UNTER VERWENDUNG VON MASCHINELLEM LERNEN
COMPENSATION DE MOUVEMENT PAR APPRENTISSAGE AUTOMATIQUE

(30) Priority: 15.04.2016 GB 201606681
(43) Date of publication of application: 28.03.2018
(73) Proprietor: Magic Pony Technology Limited, London, Greater London W1B 5AN (GB)
(72) Inventor: VAN LEUVEN, Sebastiaan, London Greater London W1B 5AN (GB); CABALLERO, Jose, London Greater London W1B 5AN (GB); WANG, Zehan, London Greater London W1B 5AN (GB); BISHOP, Rob, London Greater London W1B 5AN (GB); MAGIC PONY TECHNOLOGY LIMITED, London Greater London W1B 5AN (GB)
(74) Representative: Kennedy, Richard E.
(86) International application number: PCT/GB2017/000057
(87) International publication number: WO 2017/178783

(56) References cited:
- US-A1- 2006 062 298
- KRISHNA KUMAR ET AL: "Block-based Motion Estimation in Video Frames using Artificial Neural Networks: A Selective Review", INTERNATIONAL JOURNAL OF COMPUTER APPLICATIONS, vol. 137, no. 1, 31 March 2016 (2016-03-31), pages 27-32, XP055385219, DOI: 10.5120/ijca2016908668
- SKRZYPKOWIAK S S ET AL: "Hierarchical video motion estimation using a neural network", DIGITAL AND COMPUTATIONAL VIDEO, 2001. PROCEEDINGS. SECOND INTERNATION AL WORKSHOP ON FEB. 8-9, 2001, PISCATAWAY, NJ, USA,IEEE, 8 February 2001 (2001-02-08), pages 202-208, XP010547461, ISBN: 978-0-7695-1110-8
- WIEGAND T ET AL: "Overview of the H.264/AVC video coding standard", IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 July 2003 (2003-07-01), pages 560-576, XP011221093, ISSN: 1051-8215, DOI: 10.1109/TCSVT.2003.815165

## Description

### Field

The present invention relates to motion compensation in video encoding. More particularly, the present invention relates to the use of machine learning to improve motion compensation in video encoding.

### Background - Video Compression

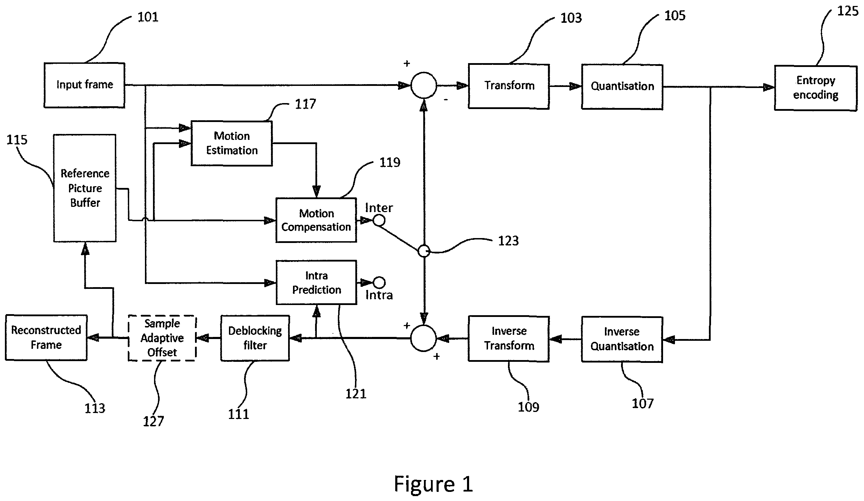

Figure 1 illustrates the generic parts of a typical video encoder process.

Video compression technologies reduce information in pictures by identifying and reducing redundancies available in the video data. This can be achieved by predicting the image (or parts thereof) from neighbouring data within the same frame (intraprediction) or from data previously signalled in other frames (interprediction). Interprediction techniques exploit similarities between pictures in a temporal dimension. Examples of such video techniques include, but are not limited to, MPEG2, H.264, HEVC, VP8, VP9, Thor, and Daala.

In general, video compression techniques comprise the use of different modules. To reduce the amount of data in a video, a residual signal is created based on the predicted samples. Intra-prediction 121 uses previously decoded sample values of neighbouring samples to assist in the prediction of current samples. The residual signal is transformed by a transform module 103 (typically, Discrete Cosine Transform or Fast Fourier Transforms are used). This transformation allows the encoder to remove data in high frequency bands, where humans notice artefacts less easily, through quantisation 105. The resulting data and all syntactical data is entropy encoded 125, which is a lossless data compression step. The quantized data is reconstructed through an inverse quantisation 107 and inverse transformation 109 step. By adding the predicted signal, the input visual data 101 is re-constructed 113. To improve the visual quality, filters, such as a deblocking filter 111 and a sample adaptive offset filter 127 can be used. The reconstructed picture 113 is stored for future reference in a reference picture buffer 115 to allow exploiting the difference static similarities between two pictures. The motion estimation process 117 evaluates one or more candidate blocks by minimizing the distortion compared to the current block. One or more blocks from one or more reference pictures are selected. The displacement between the current and optimal block(s) is used by the motion compensation 119, which creates a prediction for the current block based on the vector. For interpredicted pictures, blocks can be either intra- or interpredicted or both.

Interprediction exploits redundancies between frames of visual data. Reference frames are used to reconstruct frames that are to be displayed, resulting in a reduction in the amount of data required to be transmitted or stored. The reference frames are generally transmitted before the frames of the image to be displayed. However, the frames are not required to be transmitted in display order. Therefore, the reference frames can be prior to or after the current image in display order, or may even never be shown (i.e., an image encoded and transmitted for referencing purposes only). Additionally, interprediction allows the use of multiple frames for a single prediction, where a weighted prediction, such as averaging, is used to create a predicted block.

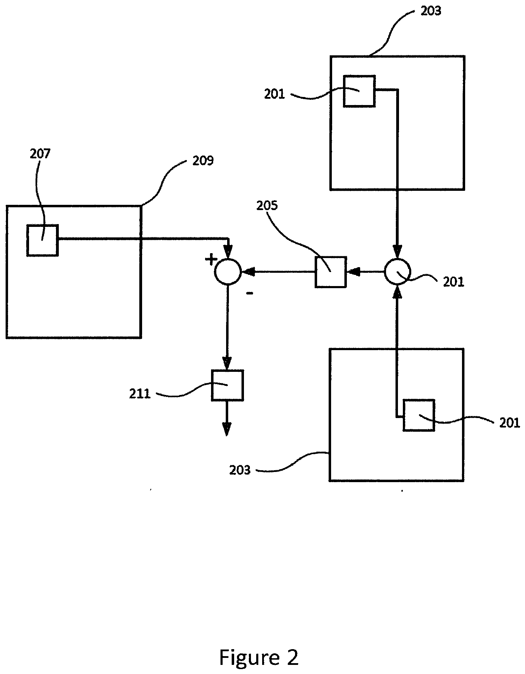

Figure 2 illustrates a schematic overview of the Motion Compensation (MC) process part of the interprediction.

Motion compensation is an essential part in the performance of video compression. In motion compensation, reference blocks 201 from reference frames 203 are combined to produce a predicted block 205 of visual data. This predicted block 205 of visual data is subtracted from the corresponding input block 207 of visual data in the frame currently being encoded 209 to produce a residual block 211 of visual data. It is the residual block 211 of visual data, along with the identities of the reference blocks 201 of visual data, which are used by a decoder to reconstruct the encoded block 207 of visual data. In this way the amount of data required to be transmitted to the decoder is reduced.

The Motion Compensation process has as input a number of pixels of the original image, referred to as a block, and one or more areas consisting of pixels (or subpixels) within the reference images that have a good resemblance with the original image. The MC subtracts the selected block of the reference image from the original block. To predict one block, the MC can use multiple blocks from multiple reference frames, through a weighted average function the MC process yields a single block that is the predictor of the block from the current frame. It is important to note that the frames transmitted prior to the current frame can be located before and/or after the current frame in display order.

The closer the predicted block 205 is to the corresponding input block 207 in the picture being encoded 209, the better the compression efficiency will be, as the residual block 211 will not be required to contain as much data. Therefore, matching the predicted block 205 as closely as possible to the current picture is essential for good encoding performance. Consequently, finding the most optimal, or closely matching, reference blocks 201 in the reference pictures 203 is required. However, process of finding the optimal reference blocks, better known as motion estimation, is not defined or specified by the MPEG standard.

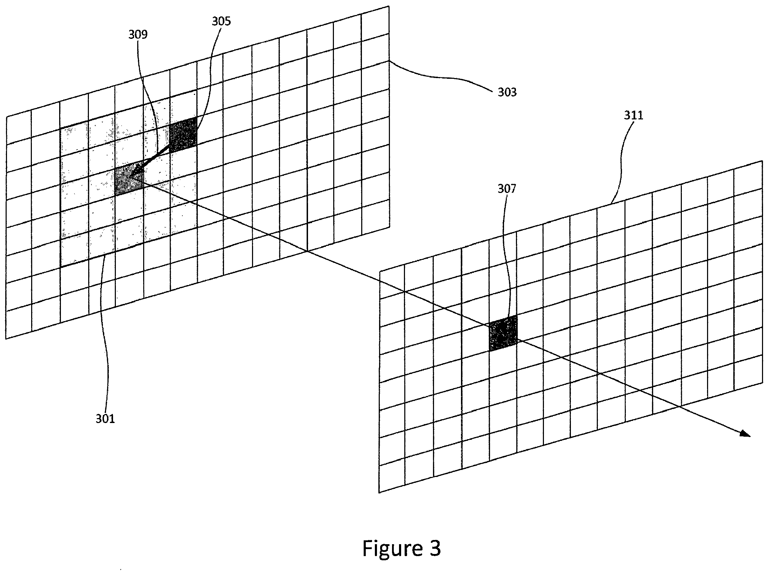

Figure 3 illustrates a visualisation of the motion estimation process.

An area 301of a reference frame 303 is searched for a data block 305 that matches the block currently being encoded 307 most closely, and a motion vector 309 determined that relates the position of this reference block 305 to the block currently being encoded 307. The motion estimation will evaluate a number of blocks in the reference frame. By applying a translation between the frame currently being encoded 3011 and the reference frame 303, any candidate block in the reference picture can be evaluated. In principle, any block of pixels in the reference image can be evaluated to find the most optimal reference block. However, this is computationally expensive, and current implementations optimise this search by limiting the number of blocks to be evaluated from the reference picture. Therefore, the most optimal reference block might not be found.

When the most optimal block is found, or at least a block that is sufficiently close to the current block, the motion compensation creates the residual block, which is used transformation and quantisation. The difference in position between the current block and the optimal block in the reference image is signalled in the form of a motion vector, which also indicates the identity of the reference image being used as a reference.

Motion estimation and compensation are crucial operations for video encoding. In order to encode a single frame, a motion field has to be estimated that will describe the displacement undergone by the spatial content of that frame relative to one or more reference frames. Ideally, this motion field would be dense, such that each pixel in the frame has an individual correspondence in the one or more reference frames. The encoding of dense motion fields is usually referred to as optical flow, and many different methods have been suggested to estimate it. However, obtaining accurate pixel wise motion fields is computationally challenging and expensive, hence in practice encoders resort to block matching algorithms that look for correspondences for blocks of pixels instead. This, in turn, limits the compression performance of the encoder.

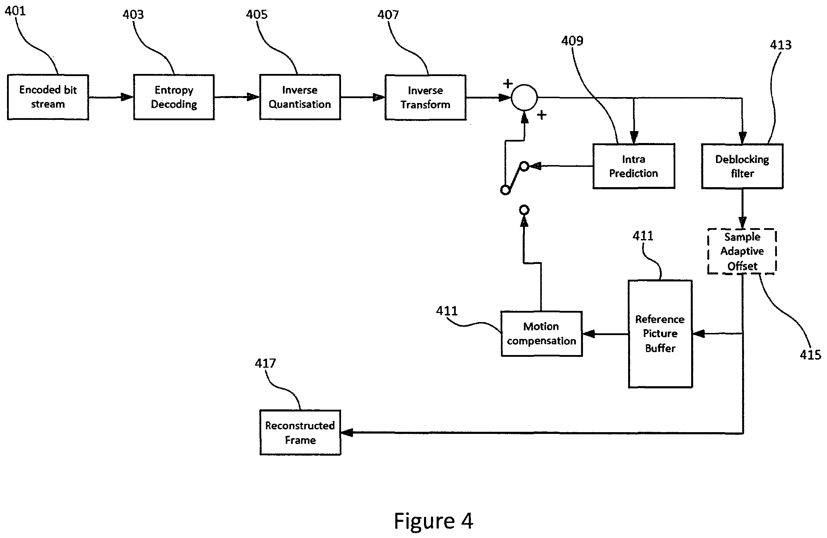

Figure 4 illustrates a generic decoder.

An encoded bit stream 401 containing encoded residual blocks of video data is received by the decoder, possibly having been transmitted over a network. The encoded bit stream 401 undergoes entropy decoding 403, followed by inverses quantisation 405 and inverse transformation 407 to generate a residual block of video data. The decoder reconstructs the prediction based on the signalled inter- or intraprediction 409 mode. Therefore, either the previously decoded and reconstructed reference frame has to be available (interprediction) or the pixel values of neighbouring pixels. For intrapredicted blocks in interpredicted frames, this means that the motion compensation 411 for the interpredicted regions has to be performed before the current intrapredicted block can be decoded.

The motion compensation 411 process at the decoder is essentially the reverse of the motion compensation process at the encoder. A predicted block of visual data is generated from the reference frames identified to the decoder in the encoded bit stream 401 by means of a weighted average. This predicted block of visual is then added to the decoded residual block of visual data in order to reconstruct the original block of video data that was encoded at the encoder. This process is repeated until all of the interpredicted blocks in the encoded picture have been reconstructed.

After the original picture has been reconstructed, it is input into a deblocking filter 413 and, in some encoding standards, a Sample Adaptive Offset filter 415. These smooth out blocking and ringing artefacts introduced by the block wise interprediction and intraprediction processes.

The final reconstructed frame 417 is then output.

### Background - Machine Learning Techniques

Machine learning is the field of study where a computer or computers learn to perform classes of tasks using the feedback generated from the experience or data gathered that the machine learning process acquires during computer performance of those tasks.

Typically, machine learning can be broadly classed as supervised and unsupervised approaches, although there are particular approaches such as reinforcement learning and semi-supervised learning which have special rules, techniques and/or approaches.

Supervised machine learning is concerned with a computer learning one or more rules or functions to map between example inputs and desired outputs as predetermined by an operator or programmer, usually where a data set containing the inputs is labelled.

Unsupervised learning is concerned with determining a structure for input data, for example when performing pattern recognition, and typically uses unlabelled data sets.

Reinforcement learning is concerned with enabling a computer or computers to interact with a dynamic environment, for example when playing a game or driving a vehicle.

Various hybrids of these categories are possible, such as "semi-supervised" machine learning where a training data set has only been partially labelled.

For unsupervised machine learning, there is a range of possible applications such as, for example, the application of computer vision techniques to image processing or video enhancement. Unsupervised machine learning is typically applied to solve problems where an unknown data structure might be present in the data. As the data is unlabelled, the machine learning process is required to operate to identify implicit relationships between the data for example by deriving a clustering metric based on internally derived information. For example, an unsupervised learning technique can be used to reduce the dimensionality of a data set and attempt to identify and model relationships between clusters in the data set, and can for example generate measures of cluster membership or identify hubs or nodes in or between clusters (for example using a technique referred to as weighted correlation network analysis, which can be applied to high-dimensional data sets, or using k-means clustering to cluster data by a measure of the Euclidean distance between each datum).

Semi-supervised learning is typically applied to solve problems where there is a partially labelled data set, for example where only a subset of the data is labelled. Semi-supervised machine learning makes use of externally provided labels and objective functions as well as any implicit data relationships.

When initially configuring a machine learning system, particularly when using a supervised machine learning approach, the machine learning algorithm can be provided with some training data or a set of training examples, in which each example is typically a pair of an input signal/vector and a desired output value, label (or classification) or signal. The machine learning algorithm analyses the training data and produces a generalised function that can be used with unseen data sets to produce desired output values or signals for the unseen input vectors/signals. The user needs to decide what type of data is to be used as the training data, and to prepare a representative real-world set of data. The user must however take care to ensure that the training data contains enough information to accurately predict desired output values without providing too many features (which can result in too many dimensions being considered by the machine learning process during training, and could also mean that the machine learning process does not converge to good solutions for all or specific examples). The user must also determine the desired structure of the learned or generalised function, for example whether to use support vector machines or decision trees.

The use of unsupervised or semi-supervised machine learning approaches are sometimes used when labelled data is not readily available, or where the system generates new labelled data from unknown data given some initial seed labels.

US 2006/0062298 A1 discloses a method comprising selectively filtering at least one reference block from an encoded video signal and decoding at least one target block in the encoded video signal based on the selectively filtered reference block.

### Summary of Invention

Aspects and/or embodiments seek to provide a method of motion compensation that utilises neural networks to improve the generation of a predicted block of visual data.

According to a first aspect, there is provided a computer implemented method for motion compensation in video data using neural networks, the method comprising the steps of: receiving one or more input blocks of video data and a plurality of reference blocks of video data selected from one or more reference frames of video data using a motion estimation process; inputting the plurality of reference blocks of video data into one or more pre-trained neural networks, the one or more neural networks configured to transform the plurality of reference blocks of video data into a predicted block of video data; transforming, by the one or more pre-trained neural networks, the input plurality of reference blocks of video data into the predicted block of video data; outputting the predicted block of video data from the one or more pre-trained neural networks ; and calculating one or more residual blocks of video data from the predicted block of video data and the one or more input blocks of video data.

According to a second aspect of the present invention, there is provided a computer implemented method for motion compensation in video data using neural networks, the method comprising steps of: receiving one or more residual blocks of video data and a plurality of reference blocks of video data selected from one or more reference frames of video data using a motion estimation process; inputting the plurality of reference blocks of video data into one or more pre-trained neural networks, wherein the one or more pre-trained neural networks are configured to transform the plurality of reference blocks of video data into a predicted block of video data; transforming, by the one or more pre-trained neural networks, the input plurality of reference blocks of video data into the predicted block of video data; outputting the predicted block of visual data from the one or more pre-trained neural networks ; and calculating one or more reconstructed blocks of video data from the predicted block of video data and the one or more residual blocks of video data.

In an embodiment, the use of a pre-trained neural network to determine a predicted block of video data from one or more reference blocks can provide a predicted block of video data that is more similar to an original, input block being encoded than a predicted block determined solely by a weighted average. The residual block of data required to reconstruct the input frame from the reference frames can then be smaller, reducing the resulting bit rate of the encoded bit stream. When reconstructing the original video data, knowledge of the pre-trained neural networks used in the encoding phase can be used to determine a predicted block to which the calculated residual block can be added to reconstruct the original frame.

Optionally, the method further comprises the additional step of receiving metadata identifying the one or more pre-trained neural networks to be used.

By transmitting metadata to the decoder allowing the required pre-trained neural networks to be identified, the decoder is not required to identify these itself, resulting in an increase in computational efficiency.

Optionally, the one or more pre-trained neural networks are selected from a library of pre-trained neural networks based on properties of the one or more of reference blocks of video data.

By selecting a content specific pre-trained neural network from a library of pre-trained neural networks based on properties of the reference blocks the efficiency of the motion estimation process can be increased when compared to using a generic pre-trained neural network on all types of reference block. It also allows for different pre-trained neural networks to be used for different blocks in the same reference image.

Optionally, the one or more reference blocks of video data are determined from one or more reference frames of video data.

Determining the reference blocks of video data from known reference frames of video data reduces the amount of data required to be encoded, as only a reference to the known reference frame, and the location of the reference block within it, need to be encoded.

Optionally, a motion vector is used to determine the one or more reference blocks of video data from the one or more reference frames of video data.

A motion vector can be estimated in a motion estimation process, which relates the position of the reference block in the reference frame to the position of the original input block in an input frame.

Optionally, the one or more reference blocks of video data are selected using at least one of: translational motion estimation; affine motion estimation; style transform, or warping.

By allowing the reference block to be selected using a variety of methods, the flexibility of the motion compensation process can be increased. The reference block can then be related to the original block by more than just a translation, for example a scaling or rotation could also be used.

Optionally, the one or more reference block of video data comprises a plurality of reference blocks of visual data.

Optionally, the step of determining the one or more predicted blocks of visual data comprises combining, using the one or more pre-trained neural network, at least two of the plurality of reference blocks of video data.

Using more than one reference block to generate a predicted block of visual data can increase the match between the original input block and the generated predicted block.

Optionally, at least two of the plurality of reference blocks of video data are each selected from a different reference frame of video data.

Selecting reference blocks from multiple different frames of video data allows the pre-trained neural network to produce predicted block using reference blocks that contain different content that may not be present in a single reference frame.

Optionally, acting on the plurality of reference blocks of video data with one or more pre-trained neural networks comprises: acting on a each reference block of video data with a separate pre-trained neural networks to transform that reference block of video data to a transformed block of video data; and combining the plurality of transformed blocks of visual data to generate the predicted block of visual data.

By applying separate algorithms to each of the reference blocks, the size of the respective algorithms can be reduced and their efficiency increased, as they are not required to process multiple reference blocks simultaneously. It also allows for a modular motion compensation process.

Optionally, at least two of the separate pre-trained neural networks applied to each of the plurality of reference blocks of video data are different.

In general, different reference blocks of visual data will have different optimal pre-trained neural networks for the motion compensation process. By using different pre-trained neural networks on reference blocks, the efficiency of the process can be increased, as a more optimal pre-trained neural network can be used for each block.

Optionally, the one or more separate pre-trained neural networks each are chosen from a library of pre-trained neural networks based on properties of the plurality of reference blocks of video data.

Choosing the pre-trained neural networks from a library of pre-trained neural networks based on properties of the plurality of reference blocks allows content specific pre-trained neural networks to be used that has been substantially optimised for use with reference blocks with those properties. These properties can include the content type, the position of the reference block within the reference frame from which it was taken and the resolution of the frame from which it was taken. It allows for an adaptive transformation of the reference blocks to improve the prediction accuracy, and for different pre-trained neural networks to be used for different blocks in the same reference image. Furthermore, the selection of the pre-trained neural network can be based on the temporal position of the reference frame from which the reference blocks have been selected.

Optionally, at least one further pre-trained neural network is applied to an output of the one or more separate pre-trained neural networks to determine the predicted block of visual data.

A further pre-trained neural network can be applied to the output of the separate pre-trained neural networks, either after a weighted average is taken of the outputs or not, to further enhance the accuracy of the predicted block of visual data. This further pre-trained neural network can compensate for the relative simplicity of the separate pre-trained neural networks applied to the reference blocks individually.

Optionally, one or more additional pre-trained neural networks are used to determine the predicted block of video data from the transformed block of video data.

Transforming the reference blocks to an intermediate block before generating the predicted block can simplify the process, especially when multiple reference blocks are used.

Optionally, the one or more pre-trained neural networks were developed using a learned approach.

Optionally, the learned approach comprises training the pre-trained neural networks on one or more known predicted blocks of video data and one or more known reference blocks of video data to minimise a difference between the outputs of the pre-trained neural networks and the known original blocks of video data.

By training the pre-trained neural networks on sets of known reference and predicted blocks, the pre-trained neural network can be substantially optimised for the motion compensation process. Using machine learning to train the pre-trained neural networks can result in more efficient and faster pre-trained neural networks than otherwise.

Optionally, the one or more pre-trained neural networks comprise at least one of: a convolutional neural network; a recurrent neural network; a long short-term memory network; a multi-dimensional convolutional network; a memory network; or a gated recurrent network.

The use of any of a convolutional neural network; recurrent neural network; long short-term memory network; multi-dimensional convolutional network; a memory network; or a gated recurrent network allows a flexible approach when generating the predicted block of visual data. The use of an algorithm with a memory unit such as a long short-term memory network (LSTM), a memory network or a gated recurrent network can keep the state of the predicted blocks from motion compensation processes performed on the same original input frame. The use of these networks can improve computational efficiency and also improve temporal consistency in the motion compensation process across a number of frames, as the algorithm maintains some sort of state or memory of the changes in motion. This can additionally result in a reduction of error rates.

Optionally, the method is performed at a node within a network.

Optionally, the method is performed as part of a video encoding or decoding process.

Optionally, the one or more predicted blocks of visual data is a single predicted block of visual data.

Herein, the word picture is preferably used to connote an array of picture elements (pixels) representing visual data such as: a picture (for example, an array of luma samples in monochrome format or an array of luma samples and two corresponding arrays of chroma samples in, for example, 4:2:0, 4:2:2, and 4:4:4 colour format); a field or fields (e.g. interlaced representation of a half frame: top-field and/or bottom-field); or frames (e.g. combinations of two or more fields).

Herein, the word block is preferably used to connote a group of pixels, a patch of an image comprising pixels, or a segment of an image. This block may be rectangular, or may have any form, for example comprise an irregular or regular feature within the image. The block may potentially comprise pixels that are not adjacent.

### Brief Description of Drawings

Embodiments will now be described, by way of example only and with reference to the accompanying drawings having like-reference numerals, in which:
Figure 1 illustrates an example of a generic encoder;
Figure 2 illustrates an example of a generic decoder;
Figure 3 illustrates an example of a generic motion compensation process;
Figure 4 illustrates an example of a motion estimation process;
Figure 5 illustrates an embodiment of a motion compensation process using a hierarchical algorithm;
Figure 6 illustrates an embodiment of a motion compensation process using two hierarchical algorithms;

Optionally, the method is performed at a network node within a network.

Optionally, the one or more hierarchical algorithms were developed using a learned approach.

Optionally, the hierarchical algorithm is trained on one or more sub-optimal reference frames and corresponding known reference frames to produce a mathematically optimised reference picture.

By training the hierarchical algorithm on sets of known optimal reference frames and sub-optimal reference frames, the hierarchical algorithm can be substantially optimised for enhancing the reference frames. Using machine learning to train the hierarchical algorithms can result in more efficient and faster hierarchical algorithms than otherwise.

Herein, the word picture is preferably used to connote an array of picture elements (pixels) representing visual data such as: a picture (for example, an array of luma samples in monochrome format or an array of luma samples and two corresponding arrays of chroma samples in, for example, 4:2:0, 4:2:2, and 4:4:4 colour format); a field or fields (e.g. interlaced representation of a half frame: top-field and/or bottom-field); or frames (e.g. combinations of two or more fields).

Herein, the word block is preferably used to connote a group of pixels, a patch of an image comprising pixels, or a segment of an image. This block may be rectangular, or may have any form, for example comprise an irregular or regular feature within the image. The block may potentially comprise pixels that are not adjacent.

### Brief Description of Drawings

Embodiments will now be described, by way of example only and with reference to the accompanying drawings having like-reference numerals, in which:
Figure 1 illustrates an example of a generic encoder;
Figure 2 illustrates an example of a generic decoder;
Figure 3 illustrates an example of a generic motion compensation process;
Figure 4 illustrates an example of a motion estimation process;

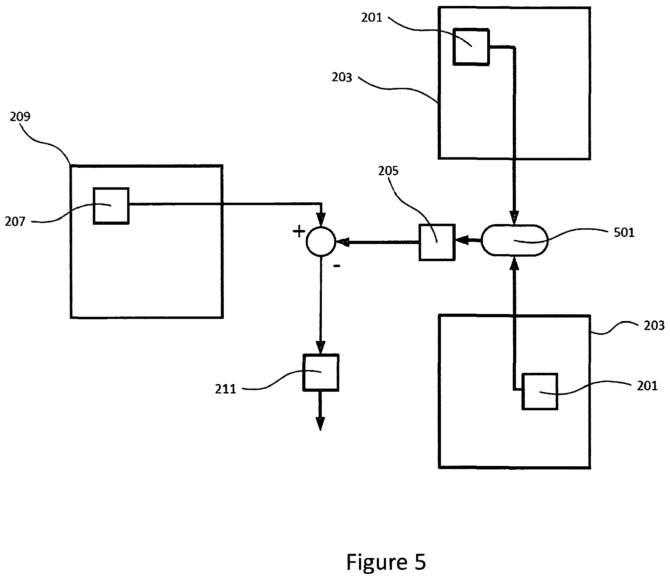

Figure 5 illustrates an embodiment of a motion compensation process using a hierarchical algorithm;

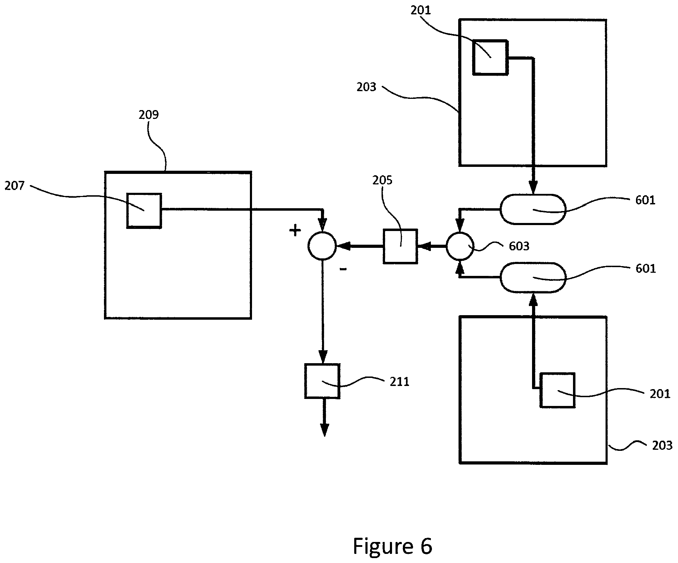

Figure 6 illustrates an embodiment of a motion compensation process using two hierarchical algorithms

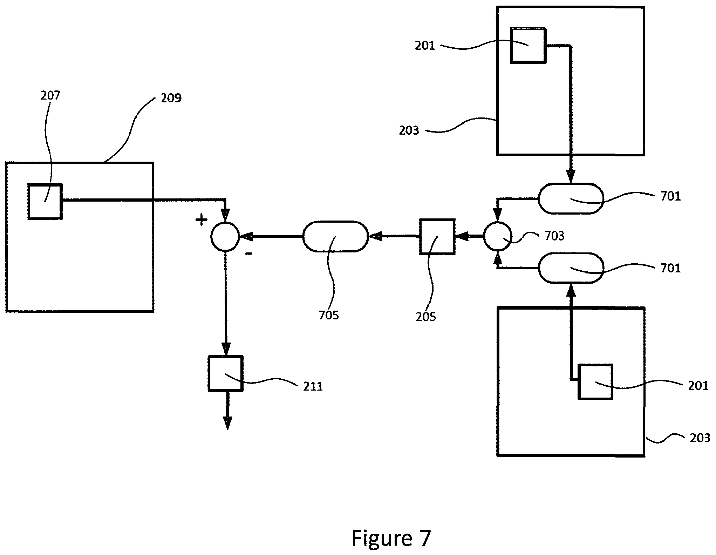

Figure 7 illustrates an embodiment of a motion compensation process using three hierarchical algorithms;

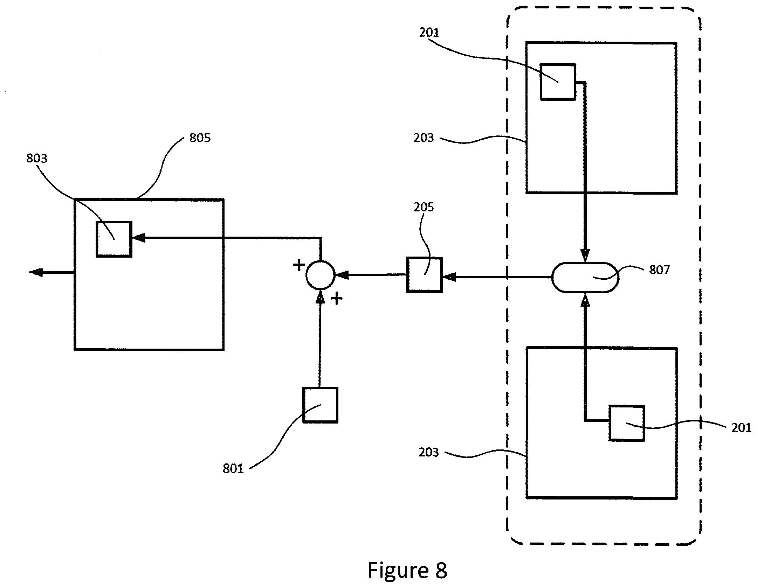

Figure 8 illustrates an embodiment of a motion compensation process used in a decoder that uses hierarchical algorithms;

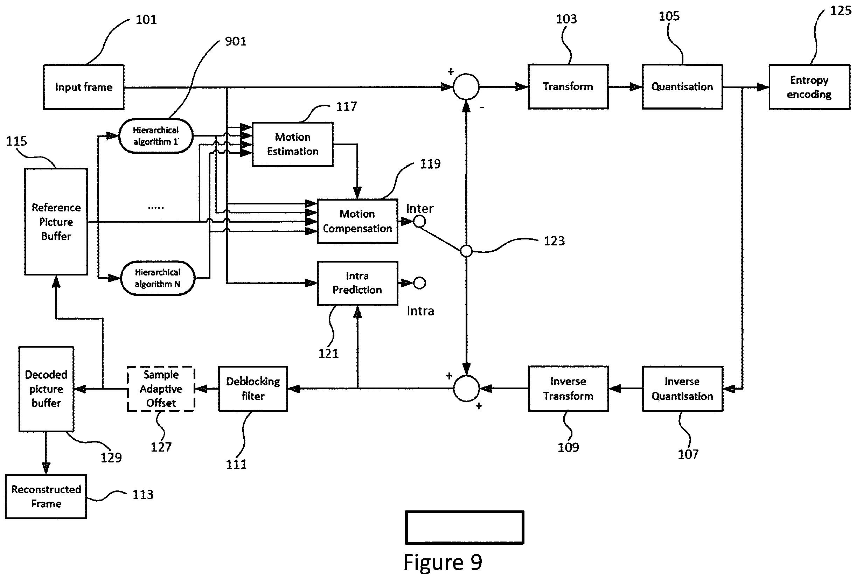

Figure 9 illustrates an embodiment of a motion compensation process using multiple hierarchical algorithms prior to the interprediction process; and

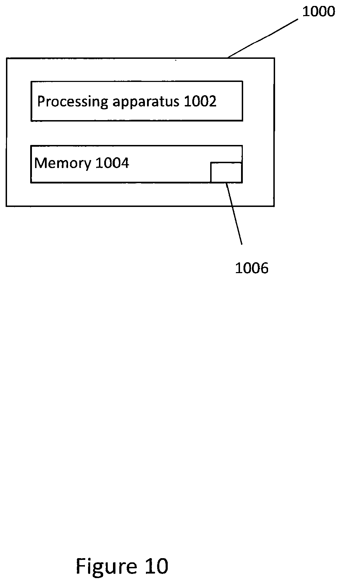

Figure 10 illustrates an apparatus comprising a processing apparatus and memory according to an exemplary embodiment

### Specific Description

Referring to Figure 5, an exemplary embodiment will now be described.

Figure 5 illustrates an embodiment of a motion compensation process using a hierarchical algorithm. An input block 207 of video data from an input frame 209 is selected, and one or more reference blocks 201 of video data from one or more reference frames 203 are selected based on their similarity to the input block 207. In the embodiment shown, two reference frames 203 are used, though it is possible that only a single reference frame is used, or that more than two are used. In the case of a single reference frame being used, multiple reference blocks can be selected from the same frame, or only a single reference block can be selected. The reference block or blocks 201 are selected using a motion estimation process, which can relate the reference blocks 201 to the input block 207 by any of a simple translation, an affine transformation or a warping. The selected reference block or blocks 201 are used as inputs into a hierarchical algorithm 501 that generates a predicted block 205 of visual data from them. This predicted block 205 is subtracted from the input block 207 to determine a residual block of visual data 211.

The hierarchical algorithm 501 acts on the selected reference blocks 201 to transform them to a predicted block 205of visual data that is substantially optimised such that the similarity between the original, input block 207 and the predicted block 205 is increased when compared to just a weighted average of the selected reference blocks 201 (when two or more reference blocks are used) or an untransformed single reference block.

The hierarchical algorithm 501 can be selected from a library of hierarchical algorithms that have been pre-trained on known reference blocks of visual data based on metric data or metadata relating to the input picture or block. The hierarchical algorithms are stored in the library after they have been trained along with metric data or metadata relating to the type of reference blocks on which they have been trained. The metric data can be, for example, the resolution of the picture or blocks, the content of the blocks or picture from which they are taken, or the position of the block within the picture from which it is taken. Additionally, the selection of the hierarchical algorithm can be dependent on the temporal position of the reference picture or pictures relative to the input picture.

For the training process, the input is an original block of video data and one or more reference blocks of video data that are assumed to be optimal. For training, the most optimal block can be found using an exhaustive block matching algorithm evaluating all possible positions for the current block within the reference picture. The algorithm is then optimised to minimise the difference between its output and the original block of video data. Depending on the performance of the motion estimation process a new network could be trained. As different motion estimation process can yield different reference blocks, the network can be optimized for each implementation independently.

If no suitable hierarchical algorithm 501 is present in the library a generic pre-trained hierarchical algorithm can be used instead. If no such generic algorithm is available, then the standard weighted average method can be used instead.

The process is repeated for each block in the input image until all residual blocks 211 for the whole image are determined. It is not necessary that all residual blocks 211 of video data be calculated using the motion compensation process, as part of the interprediction. Some of the residual blocks 211 can instead be calculated using intraprediction or different techniques such as pallet modes.

Once determined, the residual blocks 211 for the input can be encoded and transmitted across a network to a decoding device comprising a decoder, along with data identifying the reference frames from which the reference blocks 201 were selected and the position of the reference blocks within those frames 203. The position of the reference blocks 201 within the reference frames 203 is typically signalled across the network as a motion vector that was calculated during the motion estimation process. The reference frames 203 from which the corresponding reference blocks 201 are taken are transmitted across the network to the decoder prior to the transmission of the now encoded input frame, and stored in a reference buffer at the decoder.

The decoder receives the encoded bit stream containing the residual blocks 211 and metadata identifying the reference blocks 201, such as a motion vector and a reference to the corresponding reference frames 203. The identity of the hierarchical algorithms 501 used to generate the predicted blocks 205 from the reference blocks 201 are also determined by the decoder, for example from metric data associated with the reference blocks 201 or by receiving metadata in the encoded bit stream identifying the hierarchical algorithms 501 to be used, or by receiving metadata in the encoded bit stream which defines the values of a new hierarchical algorithm.

The determined hierarchical algorithm 501 is then applied to the identified reference block or blocks of visual data in order to determine a predicted block 205 of video data. The received residual block 211 of video data is added to this predicted block 205 of visual data to recreate the original block of visual data 207.

An alternative embodiment of the motion compensation process is illustrated in Figure 6. In this embodiment, the reference blocks 201 selected during the motion estimation process are each input into a separate pre-trained hierarchical algorithm 601. The outputs of these hierarchical algorithms 601 are transformed blocks of visual data, which are then combined to produce a predicted block 205 using, for example, a weighted average 603. The predicted block 205 is then subtracted from the input block 207 to generate a residual block 211. The process is repeated until all the input blocks of an input frame 209 have been processed.

In some embodiments, the separate hierarchical algorithms 601 are identical, and can be selected based on properties on the input block 207 of visual data, such as its content, resolution and/or position in the input frame 209. In alternative embodiments, the separate hierarchical algorithms 601 can be generic pre-trained hierarchical algorithms.

Alternatively, the separate hierarchical algorithms 601 can be different to one another, and be selected from a library of hierarchical algorithms based on properties of the selected reference blocks 201. These can be, for example, the content of the reference frame 203, the resolution of the reference frame 203, the position of the reference block 201 with the reference frame 203 and/or the temporal distance in the video stream between the reference frames 203 and the input frame 209.

A further embodiment of the motion compensation process is illustrated in Figure 7. In this embodiment, the reference blocks 201 selected during the motion estimation process are each input into a separate pre-trained hierarchical algorithm 701, as described in relation to figure 6. The outputs of these hierarchical algorithms 701 are transformed blocks of visual data, which are then combined to produce a combined block using, for example, a weighted average 703. The combined block is then used as an input for a further hierarchical algorithm 705 that outputs a predicted block 205. The predicted block 205 is then subtracted from the input block 207 to generate a residual block 211. The process is repeated until all the input blocks of an input frame 209 have been processed.

The above embodiments described in relation to Figures 5 to 7 can equally be applied in the case of the decoding motion compensation process, though with some of the steps reversed. Figure 8 illustrates an example of a decoding motion compensation process corresponding to the encoding motion compensation process described in relation to Figure 5. In the decoding motion compensation process, the steps relating to the generation of the predicted block of data remain the same as described in the embodiments relating to Figures 5 to 7. However, the decoder receives an encoded residual block 801 of visual data, which it adds to the predicted block 205 of visual data to reconstruct the original block 803 of visual data used in the encoding process. This is repeated for all the interpredicted blocks identified for use with this process in the encoded bit stream relating to a given picture 805 until the interpredicted parts of that picture have been reconstructed. While this diagram shows the generation of a predicted block 205 using the method described in relation to Figure 5, any of the methods described in relation to Figures 5 to 7 can be used to generate the predicted block.

The hierarchical algorithms 807 used in the generation of the predicted block of visual data at the decoder are stored at the decoder in a library along with corresponding data, such as a reference number or metadata, relating to the hierarchical algorithms. The encoded bit stream can contain data identifying which of the hierarchical algorithms 807 are required to generate the predicted block 205, such as the reference number of the hierarchical algorithm in the library. Alternatively, this can be signalled in a sideband as, for example, metadata in an app.

Figure 9 illustrates an encoding process that uses hierarchical algorithms to pre-process pictures from a reference buffer before interprediction. In this process, reference pictures stored in a reference picture buffer 115 are input into one or more pre-trained hierarchical algorithms 901, each of which transforms the reference picture, or part of the reference picture, into a transformed reference picture that is enhanced for use in the motion compensation 119 and/or motion estimation 117 processes. The non-transformed image can also be used in the motion estimation 117 and motion compensation 119 processes. The transformed images are input into the motion estimation 117 and motion compensation 119 processes, which can make them more computationally efficient. The encoder can signal if and which hierarchical algorithm 901 has been used to transform the reference picture.

The hierarchical algorithms 901 used in this process can be selected from a library of pre-trained hierarchical algorithms that are stored in a library. The hierarchical algorithms are trained on pairs of known input pictures and reference pictures to produce a mathematically optimised reference picture, which in general is different to the visually optimised picture. The hierarchical algorithms can be selected from the library based on comparing metric data relating to the input picture 101 currently being encoded with metric data relating to the pictures on which the hierarchical algorithms were trained.

In any of the embodiments described above it is possible to output a predicted block or transformed reference picture block that is in a different space, such as a different feature space, than visual data. The block can then be converted to a block of visual data using a further hierarchical algorithm. Alternatively, the reference pictures and input visual data can be transformed to this different feature space in order to perform the motion compensation process.

Any system feature as described herein may also be provided as a method feature, and vice versa. As used herein, means plus function features may be expressed alternatively in terms of their corresponding structure.

Any feature in one aspect of the invention may be applied to other aspects of the invention, in any appropriate combination. In particular, method aspects may be applied to system aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

Some of the example embodiments are described as processes or methods depicted as diagrams. Although the diagrams describe the operations as sequential processes, operations may be performed in parallel, or concurrently or simultaneously. In addition, the order or operations may be re-arranged. The processes may be terminated when their operations are completed, but may also have additional steps not included in the figures. The processes may correspond to methods, functions, procedures, subroutines, subprograms, etc.

Methods discussed above, some of which are illustrated by the diagrams, may be implemented by hardware, software, firmware, middleware, microcode, hardware description languages, or any combination thereof. When implemented in software, firmware, middleware or microcode, the program code or code segments to perform the relevant tasks may be stored in a machine or computer readable medium such as a storage medium. A processing apparatus may perform the relevant tasks.

Figure 10 shows an apparatus 1000 comprising a processing apparatus 1002 and memory 1004 according to an exemplary embodiment. Computer-readable code 1006 may be stored on the memory 1004 and may, when executed by the processing apparatus 1002, cause the apparatus 1000 to perform methods as described here, for example a method with reference to Figures 5 to 9.

The processing apparatus 1002 may be of any suitable composition and may include one or more processors of any suitable type or suitable combination of types. Indeed, the term "processing apparatus" should be understood to encompass computers having differing architectures such as single/multi-processor architectures and sequencers/parallel architectures. For example, the processing apparatus may be a programmable processor that interprets computer program instructions and processes data. The processing apparatus may include plural programmable processors. Alternatively, the processing apparatus may be, for example, programmable hardware with embedded firmware. The processing apparatus may alternatively or additionally include Graphics Processing Units (GPUs), or one or more specialised circuits such as field programmable gate arrays FPGA, Application Specific Integrated Circuits (ASICs), signal processing devices etc. In some instances, processing apparatus may be referred to as computing apparatus or processing means.

The processing apparatus 1002 is coupled to the memory 1004 and is operable to read/write data to/from the memory 1004. The memory 1004 may comprise a single memory unit or a plurality of memory units, upon which the computer readable instructions (or code) is stored. For example, the memory may comprise both volatile memory and non-volatile memory. In such examples, the computer readable instructions/program code may be stored in the non-volatile memory and may be executed by the processing apparatus using the volatile memory for temporary storage of data or data and instructions. Examples of volatile memory include RAM, DRAM, and SDRAM etc. Examples of non-volatile memory include ROM, PROM, EEPROM, flash memory, optical storage, magnetic storage, etc.

An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

Methods described in the illustrative embodiments may be implemented as program modules or functional processes including routines, programs, objects, components, data structures, etc., that perform particular tasks or implement particular functionality, and may be implemented using existing hardware. Such existing hardware may include one or more processors (e.g. one or more central processing units), digital signal processors (DSPs), application-specific-integrated-circuits, field programmable gate arrays (FPGAs), computers, or the like.

Unless specifically stated otherwise, or as is apparent from the discussion, terms such as processing or computing or calculating or determining or the like, refer to the actions and processes of a computer system, or similar electronic computing device. Note also that software implemented aspects of the example embodiments may be encoded on some form of non-transitory program storage medium or implemented over some type of transmission medium. The program storage medium may be magnetic (e.g. a floppy disk or a hard drive) or optical (e.g. a compact disk read only memory, or CD ROM), and may be read only or random access. Similarly the transmission medium may be twisted wire pair, coaxial cable, optical fibre, or other suitable transmission medium known in the art. The example embodiments are not limited by these aspects in any given implementation.

## Claims

1. A computer implemented method for motion compensation in video data using neural networks, the method comprising the steps of:
receiving one or more input blocks (207) of video data from an input frame (209) of video data and a plurality of reference blocks (201) of video data selected from one or more reference frames (203) of video data using a motion estimation process;
inputting the plurality of reference blocks (201) of video data into one or more pre-trained neural networks (501), wherein the one or more pre-trained neural networks are configured to transform the plurality of reference blocks (201) of video data into a predicted block (205) of video data;
transforming, by the one or more pre-trained neural networks, the input plurality of reference blocks (201) of video data into the predicted block (205) of video data;
outputting the predicted block (205) of video data from the one or more pre-trained neural networks (501); and
calculating one or more residual blocks (211) of video data from predicted block (205) of video data and the one or more input blocks (207) of video data.

2. A computer implemented method for motion compensation in video data using hierarchical algorithms, the method comprising steps of:
receiving one or more residual blocks (801) of video data and a plurality of reference blocks (201) of video data selected from one or more reference frames (203) of video data using a motion estimation process;
inputting the plurality of reference blocks (201) of video data into one or more pre-trained neural networks (807), wherein the one or more pre-trained neural networks are configured to transform the plurality of reference blocks (201) of video data into a predicted block (205) of video data;
transforming, by the one or more pre-trained neural networks, the input plurality of reference blocks (201) of video data into the predicted block (205) of video data;
outputting the predicted block (205) of video data from the one or more pre-trained neural networks (501); and
calculating one or more reconstructed blocks (805) of video data from the one or more predicted blocks (205) of video data and the one or more residual blocks (801) of video data.

3. A method according to claim 2, further comprising the additional step of receiving metadata identifying the pre-trained neural network (807) to be used.

4. A method according to any preceding claim, wherein the pre-trained neural network (501, 807) is selected from a library of pre-trained neural networks based on properties of the plurality of reference blocks of video data.

5. A method according to any preceding claim, wherein a motion vector is used to select the plurality of reference blocks (201) of video data from the one or more reference frames (203) of video data.

6. A method according to any preceding claim, wherein the plurality of reference blocks (201) of video data are determined using at least one of: translational motion estimation; affine motion estimation; style transform, or warping.

7. A method according to any preceding claim, wherein at least two of the plurality of reference blocks (201) of video data are each selected from a different reference frame (203) of video data to each other.

8. A method according to any preceding claim, wherein the one or more pre-trained neural networks were developed using a learned approach and wherein the learned approach comprises training the neural networks on one or more known predicted blocks of video data and a plurality of known reference blocks of video data to minimise a difference between the outputs of the networks and the known original blocks of video data.

9. A method according to any preceding claim, wherein the one or more pre-trained neural networks comprise at least one of: a convolutional neural network; a recurrent neural network; a long short-term memory network; a multi-dimensional convolutional network; a memory network; or a gated recurrent network.

10. A method according to any preceding claim, wherein the method is performed as part of a video encoding or decoding process.

11. Apparatus (1000) comprising:
at least one processor (1002);
at least one memory (1004) including computer program code (1006) which,
when executed by the at least one processor (1002), causes the apparatus (1000) to perform the method of any one of claims 1 to 10.

12. A computer readable medium having computer readable code stored thereon, the computer readable code, when executed by at least one processor, causing the performance of the method of any one of claims 1 to 10.

## Patentansprüche

1. Computerimplementiertes Verfahren zur Bewegungskompensation in Videodaten unter Verwendung neuronaler Netzwerke, das Verfahren umfassend die folgenden Schritte:
Empfangen eines oder mehrerer Eingangsblöcke (207) von Videodaten aus einem Eingangsframe (209) von Videodaten und einer Vielzahl von Referenzblöcken (201) von Videodaten, ausgewählt aus einem oder mehreren Referenzframes (203) von Videodaten, unter Verwendung eines Bewegungsschätzungsprozesses;
Eingeben der Vielzahl von Referenzblöcken (201) von Videodaten in ein oder mehrere vortrainierte neuronale Netzwerke (501), wobei das eine oder die mehreren vortrainierten neuronalen Netzwerke konfiguriert sind, um die Vielzahl von Referenzblöcken (201) von Videodaten in einen vorhergesagten Block (205) von Videodaten umzuwandeln;
Umwandeln, durch das eine oder die mehreren vortrainierten neuronalen Netzwerke, der eingegebenen Vielzahl von Referenzblöcken (201) von Videodaten in den vorhergesagten Block (205) von Videodaten;
Ausgeben des vorhergesagten Blocks (205) von Videodaten von dem einen oder den mehreren vortrainierten neuronalen Netzwerken (501); und
Berechnen eines oder mehrerer Restblöcke (211) von Videodaten aus dem vorhergesagten Block (205) von Videodaten und dem einen oder den mehreren Eingangsblöcken (207) von Videodaten.

2. Computerimplementiertes Verfahren zur Bewegungskompensation in Videodaten unter Verwendung hierarchischer Algorithmen, das Verfahren umfassend die folgenden Schritte:
Empfangen eines oder mehrerer Restblöcke (801) von Videodaten und einer Vielzahl von Referenzblöcken (201) von Videodaten, ausgewählt aus einem oder mehreren Referenzframes (203) von Videodaten, unter Verwendung eines Bewegungsschätzungsprozesses;
Eingeben der Vielzahl von Referenzblöcken (201) von Videodaten in ein oder mehrere vortrainierte neuronale Netzwerke (807), wobei das eine oder die mehreren vortrainierten neuronalen Netzwerke konfiguriert sind, um die Vielzahl von Referenzblöcken (201) von Videodaten in einen vorhergesagten Block (205) von Videodaten umzuwandeln;
Umwandeln, durch das eine oder die mehreren vortrainierten neuronalen Netzwerke, der eingegebenen Vielzahl von Referenzblöcken (201) von Videodaten in den vorhergesagten Block (205) von Videodaten;
Ausgeben des vorhergesagten Blocks (205) von Videodaten von dem einen oder den mehreren vortrainierten neuronalen Netzwerken (501); und
Berechnen eines oder mehrerer rekonstruierter Blöcke (805) von Videodaten aus dem einen oder den mehreren vorhergesagten Blöcken (205) von Videodaten und dem einen oder den mehreren Restblöcken (801) von Videodaten.

3. Verfahren nach Anspruch 2, ferner umfassend den zusätzlichen Schritt eines Empfangens von Metadaten, die das vortrainierte neuronale Netzwerk (807) identifizieren, das verwendet werden soll.

4. Verfahren nach einem vorherigen Anspruch, wobei das vortrainierte neuronale Netzwerk (501, 807) ausgewählt ist aus einer Bibliothek von vortrainierten neuronalen Netzwerken basierend auf Eigenschaften der Vielzahl von Referenzblöcken von Videodaten.

5. Verfahren nach einem vorherigen Anspruch, wobei ein Bewegungsvektor verwendet wird, um die Vielzahl von Referenzblöcken (201) von Videodaten aus einem oder mehreren Referenzframes (203) von Videodaten auszuwählen.

6. Verfahren nach einem vorherigen Anspruch, wobei die Vielzahl von Referenzblöcken (201) von Videodaten unter Verwendung von mindestens einer von Folgenden bestimmt werden: Translationsbewegungsschätzung, affine Bewegungsschätzung, Stiltransformation oder Verzerrung.

7. Verfahren nach einem vorherigen Anspruch, wobei mindestens zwei der Vielzahl von Referenzblöcken (201) von Videodaten jeweils ausgewählt sind aus einem anderen Referenzframe (203) von Videodaten.

8. Verfahren nach einem vorherigen Anspruch, wobei das eine oder die mehreren vortrainierten neuronalen Netzwerke unter Verwendung eines gelernten Ansatzes entwickelt wurden und wobei der gelernte Ansatz ein Trainieren der neuronalen Netzwerke auf einem oder mehreren bekannten vorhergesagten Blöcken von Videodaten und einer Vielzahl von bekannten Referenzblöcken von Videodaten umfasst, um eine Differenz zwischen den Ausgaben der Netzwerke und den bekannten ursprünglichen Blöcken von Videodaten zu minimieren.

9. Verfahren nach einem vorherigen Anspruch, wobei das eine oder die mehreren vortrainierten neuronalen Netzwerke mindestens eines von Folgenden umfassen: ein neuronales Faltungsnetz, ein rekurrentes neuronales Netz, ein Netz mit Langzeit-Kurzzeitgedächtnis, ein mehrdimensionales Faltungsnetz, ein Speichernetz oder ein rekurrentes Gatternetz.

10. Verfahren nach einem vorherigen Anspruch, wobei das Verfahren als Teil eines Videocodierungs- oder -decodierungsprozesses ausgeführt wird.

11. Gerät (1000) umfassend:
mindestens einem Prozessor (1002);
mindestens einen Speicher (1004), der einen Computerprogrammcode (1006) beinhaltet, der, wenn er von dem mindestens einen Prozessor (1002) ausgeführt wird, das Gerät (1000) veranlasst, das Verfahren nach einem der Ansprüche 1 bis 10 durchzuführen.

12. Computerlesbares Medium, auf dem computerlesbarer Code gespeichert ist, wobei der computerlesbare Code, wenn er von mindestens einem Prozessor ausgeführt wird, die Durchführung des Verfahrens nach einem der Ansprüche 1 bis 10 bewirkt.

## Revendications

1. Procédé mis en œuvre par ordinateur permettant la compensation de mouvement dans des données vidéo à l'aide des réseaux neuronaux, le procédé comprenant les étapes de :
réception d'un ou plusieurs blocs d'entrée (207) de données vidéo en provenance d'une trame d'entrée (209) de données vidéo et d'une pluralité de blocs de référence (201) de données vidéo sélectionnées à partir d'une ou plusieurs trames de référence (203) de données vidéo à l'aide d'un processus d'estimation de mouvement ;
entrée la pluralité de blocs de référence (201) de données vidéo dans un ou plusieurs réseaux neuronaux préalablement entraînés (501), ledit ou lesdits réseaux neuronaux préalablement entraînés étant conçus pour transformer la pluralité de blocs de référence (201) de données vidéo dans un bloc prédit (205) de données vidéo ;
transformation, par le ou les réseaux neuronaux préalablement entraînés, de la pluralité de blocs de référence entrés (201) de données vidéo en le bloc prédit (205) de données vidéo ;
émission en sortie du bloc prédit (205) de données vidéo à partir du ou des réseaux neuronaux préalablement entraînés (501) ; et
calcul d'un ou plusieurs blocs résiduels (211) de données vidéo à partir d'un bloc prédit (205) de données vidéo et du ou des blocs d'entrée (207) de données vidéo.

2. Procédé mis en oeuvre par ordinateur permettant la compensation de mouvement dans des données vidéo à l'aide des algorithmes hiérarchiques, le procédé comprenant les étapes de :
réception d'un ou plusieurs blocs résiduels (801) de données vidéo et d'une pluralité de blocs de référence (201) de données vidéo sélectionnés à partir d'une ou plusieurs trames de référence (203) de données vidéo à l'aide d'un processus d'estimation de mouvement ;
entrée la pluralité de blocs de référence (201) de données vidéo dans un ou plusieurs réseaux neuronaux préalablement entraînés (807), ledit ou lesdits réseaux neuronaux préalablement entraînés étant configurés pour transformer la pluralité de blocs de référence (201) de données vidéo dans un bloc prédit (205) de données vidéo ;
transformation, par le ou les réseaux neuronaux préalablement entraînés, de la pluralité de blocs de référence entrés (201) de données vidéo en le bloc prédit (205) de données vidéo ;
émission en sortie du bloc prédit (205) de données vidéo à partir du ou des réseaux neuronaux préalablement entraînés (501) ; et
calcul d'un ou de plusieurs blocs reconstruits (805) de données vidéo à partir du ou des blocs prédits (205) de données vidéo et du ou des blocs résiduels (801) de données vidéo.

3. Procédé selon la revendication 2, comprenant en outre l'étape supplémentaire de réception de métadonnées identifiant le réseau neuronal préalablement entraîné (807) à utiliser.

4. Procédé selon une quelconque revendication précédente, ledit réseau neuronal préalablement entraîné (501, 807) étant sélectionné dans une bibliothèque de réseaux neuronaux préalablement entraînés sur la base des propriétés de la pluralité de blocs de référence de données vidéo.

5. Procédé selon une quelconque revendication précédente, un vecteur de mouvement étant utilisé pour sélectionner la pluralité de blocs de référence (201) de données vidéo à partir de la ou des trames de référence (203) de données vidéo.

6. Procédé selon une quelconque revendication précédente, ladite pluralité de blocs de référence (201) de données vidéo étant déterminés à l'aide d'au moins un parmi : une estimation de mouvement de translation ; une estimation de mouvement affine ; une transformation de style ou une déformation.

7. Procédé selon une quelconque revendication précédente, au moins deux de la pluralité de blocs de référence (201) de données vidéo étant chacun sélectionnés à partir d'une trame de référence (203) différente de données vidéo l'un par rapport à l'autre.

8. Procédé selon une quelconque revendication précédente, ledit ou lesdits réseaux neuronaux préalablement entraînés ayant été développés à l'aide d'une approche apprise et ladite approche apprise comprenant l'entraînement des réseaux neuronaux sur un ou plusieurs blocs prédits connus de données vidéo et une pluralité de blocs de référence connus de données vidéo pour minimiser une différence entre les sorties des réseaux et les blocs originaux connus de données vidéo.

9. Procédé selon une quelconque revendication précédente, ledit ou lesdits réseaux neuronaux préalablement entraînés comprenant au moins un parmi : un réseau neuronal convolutif ; un réseau neuronal récurrent ; un réseau à mémoires à long court terme ; un réseau convolutif multidimensionnel ; un réseau à mémoires ; ou un réseau récurrent à portes.

10. Procédé selon une quelconque revendication précédente, ledit procédé étant réalisé dans le cadre d'un processus de codage ou de décodage vidéo.

11. Appareil (1000) comprenant :
au moins un processeur (1002) ;
au moins une mémoire (1004) comprenant un code de programme informatique (1006) qui, lorsqu'il est exécuté par le au moins un processeur (1002), amène l'appareil (1000) à réaliser le procédé de l'une quelconque des revendications 1 à 10.

12. Support lisible par ordinateur sur lequel est stocké un code lisible par ordinateur, le code lisible par ordinateur, lorsqu'il est exécuté par au moins un processeur, entraînant la réalisation du procédé selon l'une quelconque des revendications 1 à 10.
